# EUROPÄISCHE PATENTANMELDUNG

(11) **EP 4 685 112 A1**
(43) Veröffentlichungstag der Anmeldung: **28.01.2026**
(21) Anmeldenummer: 24020245.7
(22) Anmeldetag: 26.07.2024
(51) Int. Cl.: C01C 1/04, B01J 8/04

(54) **VERFAHREN UND ANLAGE ZUR HERSTELLUNG EINES AMMONIAKPRODUKTS**

(71) Anmelder: Linde GmbH, 82049 Pullach (DE); Technische Universität München, 80333 München (DE)
(72) Erfinder: Kender, Robert, 82049 Pullach (DE); Reinke, Michael, 82049 Pullach (DE); Klein, Harald, 80280 München (DE); Fahr, Steffen, 80280 München (DE)
(74) Vertreter: Fischer, Werner

(57) **Zusammenfassung**

Es wird ein Verfahren zur Herstellung eines Ammoniakprodukts vorgeschlagen, wobei ein Synthesereaktor (120) verwendet wird, der eine Anzahl von Katalysatorbetten (121, 122, 123) aufweist, die in einer Strömungsrichtung hintereinander in dem Synthesereaktor (120) angeordnet sind, wobei dem Synthesereaktor (120) ein Stickstoff und Wasserstoff enthaltendes erstes Gasgemisch zugeführt und ein Stickstoff, Wasserstoff und Ammoniak enthaltendes zweites Gasgemisch entnommen wird, wobei nach einem in der Strömungsrichtung letzten Katalysatorbett (123) der Katalysatorbetten (121, 122, 123) ein terminaler Wärmeübertrager (126) innerhalb des Synthesereaktors (120) bereitgestellt ist, und der terminale Wärmeübertrager (126) zumindest zeitweise unter Verwendung eines einstellbaren Anteils des ersten Gasgemischs zum Kühlen des zweiten Gasgemischs betrieben wird. Es ist vorgesehen, dass der Anteil des ersten Gasgemischs, der zumindest zeitweise für das Kühlen des zweiten Gasgemischs verwendet wird, nach Maßgabe einer Regeleinrichtung (106, 206) eingestellt wird, und dass die Regeleinrichtung (106, 206) mit einer Regelgröße betrieben wird, die ausgewählt ist aus einer Temperatur an einem Eintritt in das in der Strömungsrichtung letzte Katalysatorbett (123) oder einer Differenz zwischen der Temperatur an dem Eintritt in das in der Strömungsrichtung letzte Katalysatorbett (123) und einer Temperatur an einem Austritt eines in Strömungsrichtung ersten Katalysatorbetts (121) der Katalysatorbetten (121, 122, 123). Eine entsprechende Anlage (100, 200) wird ebenfalls vorgeschlagen.

## Beschreibung

### Gebiet

Die vorliegende Offenbarung betrifft die Herstellung eines Ammoniakprodukts.

### Hintergrund

Die Ammoniaksynthese erfolgt überwiegend mittels des Haber-Bosch-Verfahrens, bei dem Wasserstoff und Stickstoff bei hohen Drücken und Temperaturen katalytisch zu Ammoniak umgesetzt werden. Aufgrund thermodynamischer Limitierungen erfolgt die Umsetzung allerdings nur unvollständig. Einen zur Ammoniaksynthese verwendeten Synthesereaktor verlässt daher ein Wasserstoff, Stickstoff und Ammoniak enthaltendes Gasgemisch, das in einer Reihe von Wärmeübertragern abgekühlt wird, um Ammoniak durch Kondensation abzuscheiden. Verbleibender Wasserstoff und Stickstoff sowie Reste nicht kondensierten Ammoniaks werden zur Erhöhung der Ammoniakausbeute üblicherweise in einem Synthesekreislauf zum Synthesereaktor zurückgeführt.

Für die Ammoniaksynthese verwendete Synthesereaktoren können als adiabate Mehrbettrektoren ausgeführt sein, die wenigstens zwei strömungstechnisch miteinander verbundene Katalysatorbetten aufweisen. Die Katalysatorbetten werden seriell durchströmt. Zwischen den Katalysatorbetten sind jeweils geeignete Kühleinrichtungen angeordnet, über die in dem jeweils vorgeschalteten Katalysatorbett gebildete Wärme abgeführt wird.

Es besteht der Bedarf, zur Ammoniaksynthese verwendete Synthesereaktoren unter stark verringerter Last und mit häufigen Lastwechseln zu betreiben.

### Übersicht

Vor diesem Hintergrund werden ein Verfahren und eine Anlage mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren dient zur Herstellung eines Ammoniakprodukts, wobei ein Synthesereaktor verwendet wird, der eine Anzahl von Katalysatorbetten aufweist, die in einer Strömungsrichtung hintereinander in dem Synthesereaktor angeordnet sind, wobei dem Synthesereaktor ein Stickstoff und Wasserstoff enthaltendes erstes Gasgemisch zugeführt und ein Stickstoff, Wasserstoff und Ammoniak enthaltendes zweites Gasgemisch entnommen wird, wobei nach einem in der Strömungsrichtung letzten Katalysatorbett der Katalysatorbetten ein terminaler Wärmeübertrager innerhalb des Synthesereaktors bereitgestellt ist, und wobei der terminale Wärmeübertrager zumindest zeitweise unter Verwendung eines einstellbaren Anteils des ersten Gasgemischs zum Kühlen des zweiten Gasgemischs betrieben wird.

Ein derartiges Verfahren ist in der EP 4 349 779 A1 beschrieben. Dort wird vorgeschlagen, nach einem in Stromrichtung letzten Katalysatorbett eine weitere Kühleinrichtung bereitzustellen, und diese mit einem Wasserstoff und Ammoniak enthaltenden Gasgemisch als Kühlmittel zu betreiben, welches anschließend durch die Katalysatorbetten geführt und der Ammoniaksynthese unterworfen wird. Es handelt sich bei dieser Kühleinrichtung nach dem in Stromrichtung letzten Katalysatorbett also um einen Wärmeübertrager (hier auch als "terminaler" Wärmeübertrager im Synthesereaktor bezeichnet), mittels dessen eine Wärmeübertragung von einem den Synthesereaktor verlassenden Gasgemisch ("zweites" Gasgemisch) auf ein dem Synthesereaktor zugeführtes Gasgemisch ("erstes" Gasgemisch) vorgenommen wird. Dieser wird auch im Deutschen mit dem englischen Begriff "Feed-Effluent"-Wärmeübertrager bezeichnet. Neben diesem Feed-Effluent-Wärmeübertrager, der innerhalb eines Synthesereaktormantels angeordnet ist und daher nachfolgend auch als "interner" Wärmeübertrager bezeichnet wird, können weitere, außerhalb des Synthesereaktormantels angeordnete und daher als "externe" Wärmeübertrager bezeichnete Feed-Effluent-Wärmeübertrager vorhanden sein.

Zwischen den Katalysatorbetten angeordnete Kühlreinrichtungen werden von Gasgemischen durchströmt, die aus dem jeweils stromaufwärts angeordneten Katalysatorbett ausgeführt, dann durch die Kühleinrichtung geführt und anschließend dem jeweils srtomabwärtigen Katalysatorbett zugeführt werden. Diese Gasgemische werden nachfolgend auch als "Zwischengemische" bezeichnet, da es sich um Gemische handelt, die in ihren Gehalten an Wasserstoff, Stickstoff und Ammoniak zwischen dem ersten und zweiten Gasgemisch liegen.

In dem vorgeschlagenen Verfahren wird der Anteil des ersten Gasgemischs, der zumindest zeitweise für das Kühlen des zweiten Gasgemischs verwendet wird, nach Maßgabe einer Regeleinrichtung eingestellt, wobei die Regeleinrichtung mit einer Regelgröße betrieben wird, die ausgewählt ist aus einer Temperatur an einem Eintritt in das in der Strömungsrichtung letzte Katalysatorbett oder einer Differenz zwischen der Temperatur an dem Eintritt in das in der Strömungsrichtung letzte Katalysatorbett und einer Temperatur an einem Austritt des in der Strömungsrichtung ersten Katalysatorbetts.

In dem vorgeschlagenen Verfahren wird der Betrieb einer Anlage zur Herstellung von Ammoniak, beispielsweise wie in der EP 4 349 779 A1 offenbart, verbessert. Das vorgeschlagene Verfahren ermöglicht einen sicheren, stabilen, und automatisierten Betrieb über den gesamten Betriebsbereich der Anlage, der zudem ausgesprochen apparateschonend ist. Das hier vorgeschlagene Verfahren und seine Ausgestaltungen umfassen ein Regelungskonzept, welches einen reibungsfreien Wechsel zwischen unterschiedlichen Betriebsmodi ermöglicht. Somit können das vorgeschlagene Verfahren und seine Ausgestaltungen insbesondere dann besonders vorteilhaft sein, wenn keine eher konstanten Quellen für Wasserstoff für die Ammoniaksynthese wie typische Reformierungsverfahren sondern beispielsweise durch elektrochemische Zerlegung von Wasser unter Verwendung eines Elektrolyseurs auf Grundlage regenerativ erzeugten elektrischen Stroms bereitstehen.

Die Anzahl der Katalysatorbetten kann insbesondere drei betragen, wobei hier vorgeschlagene Ausgestaltungen aber nicht auf eine derartige Anzahl beschränkt sind. Insbesondere können zwischen den Katalysatorbetten Wärmeübertrager als Zwischenkühler angeordnet sein, die zumindest zeitweise unter Verwendung eines weiteren Anteils des ersten Gasgemischs zur Kühlung von Zwischengemischen, die durch die Katalysatorbetten strömen, betrieben werden. Bei diesen Zwischengemischen kann es sich insbesondere um Prozessgase handeln, die jeweils aus dem direkt stromaufwärtigen Katalysatorbett abströmen. Der Begriff "Zwischengemisch" wurde außerdem bereits oben erläutert. Dies kann insbesondere in einem regulären Betrieb mit Vollast oder höherer Last erfolgen. Dagegen kann in einem Betrieb mit tiefer Unterlast der terminale Wärmeübertrager verwendet werden.

Die Temperaturregelung kann insbesondere als eine Split-Range-Regelung konfiguriert sein, die den Anteil des ersten Gasgemischs, der zeitweise für das Kühlen des zweiten Gasgemischs verwendet wird, und der weitere Anteil des ersten Gasgemischs, der zeitweise zur Kühlung der Zwischengemische verwendet wird, einstellt. Hierbei werden als Stellgrößen der Split-Range-Regelung Ventilöffnungsgrade insbesondere von Ventilen (106a, 106b) verwendet, die den Anteil des ersten Gasgemischs, der zumindest zeitweise für das Kühlen des zweiten Gasgemischs verwendet wird, und den weiteren Anteil des ersten Gasgemischs, der zumindest zeitweise zur Kühlung der Zwischengemische verwendet wird, einstellen. Auf diese Weise ergibt sich der Vorteil einer besonders präzisen und effizienten Regelung.

Das Verfahren und seine Ausgestaltungen können insbesondere einen ersten Verfahrensmodus und einen zweiten Verfahrensmodus umfassen, wobei dem Synthesereaktor mit dem ersten Gasgemisch in dem ersten Verfahrensmodus frisch eingesetzter Stickstoff und Wasserstoff in einer ersten Menge zugeführt wird, wobei dem Synthesereaktor mit dem ersten Gasgemisch in dem zweiten Verfahrensmodus frisch eingesetzter Stickstoff und Wasserstoff in einer zweiten Menge zugeführt wird, und wobei die zweite Menge des frisch eingesetzten Stickstoffs und Wasserstoffs geringer ist als die erste Menge des frisch eingesetzten Stickstoffs und Wasserstoffs, und insbesondere weniger als 50%, 40%, 30%, 20%, 10% oder 5% der ersten Menge des frisch eingesetzten Stickstoffs und Wasserstoffs beträgt. Auch beliebige Bereiche zwischen den genannten Prozentangaben können verwendet werden. Der frisch eingesetzte Stickstoff und der frisch eingesetzte Wasserstoff werden insbesondere in für die Ammoniaksynthese stöchiometrischen Mengen eingesetzt, und die erste und zweite Menge betreffen insbesondere eine Gesamtmenge aus Stickstoff und Wasserstoff in dem Frischeinsatz. Diese bilden zusammen mit weiterem, rückgeführtem Stickstoff und Wasserstoff die gesamten verfügbaren Mengen an Edukten für die Ammoniaksynthese.

In diesem Zusammenhang ist ferner insbesondere vorgesehen, dass dem Synthesereaktor das zweite Gasgemisch in dem ersten Verfahrensmodus in einer dritten Menge entnommen wird, und das zweite Gasgemisch in dem zweiten Verfahrensmodus in einer vierten Menge entnommen wird, wobei die vierte Menge des zweiten Gasgemischs geringer oder gleich der dritten Menge des zweiten Gasgemischs ist und insbesondere mehr als 5%, 10%, 20%, 30%, 40% oder 50% der zweiten Menge des zweiten Gasgemischs beträgt. Auch hier können beliebige Bereiche zwischen den genannten Prozentangaben verwendet werden. Das vorgeschlagene Verfahren und seine Ausgestaltungen umfassen somit insbesondere einen Betrieb bei tiefer Teillast, der insbesondere bei schwankendem Wasserstoffangebot besonders vorteilhaft ist, und rasche, flexible Lastwechsel.

Der zweite Verfahrensmodus betrifft insbesondere die erwähnte tiefe Teillast. Diese umfasst typischerweise, dass der Ammoniakanlage nur, bezogen auf Volllast, 5 bis 10% des Frischeinsatzes zugeführt werden. Das Ziel des Betriebs mit dem internen Feed-Effluent-Wärmeübertrager ist es in den hier vorgeschlagenen Ausgestaltungen, dass das Gasgemisch, welches dem Reaktor zugeführt wird, größer als 5 bis 10 % der nominalen Menge ist, obwohl, die Menge an frisch eingesetztem Wasserstoff und Stickstoff nur bei 5 bis 10% liegt. Es soll insbesondere nicht ausgeschlossen sein, dass der zweite Betriebsmodus auch bei höheren, sowie der erste Betriebsmodus bei geringeren Lasten verwendet werden kann. Die entsprechenden Betriebsmodi sollen jedoch vorzugweise in den entsprechenden Lastbereichen verwendet werden. In bestimmten Ausgestaltungen umfasst das vorgeschlagene Verfahren und seine Ausgestaltungen, dass der weitere Anteil des ersten Gasgemischs, der zur Kühlung der Zwischengemische durch die Zwischenkühler geführt wird, in dem zweiten Verfahrensmodus geringer als in dem ersten Verfahrensmodus ist, und/oder dass der der Anteil des ersten Gasgemischs, der für das Kühlen des zweiten Gasgemischs durch den terminalen Wärmeübertrager geführt wird, in dem ersten Verfahrensmodus geringer als in dem zweiten Verfahrensmodus ist.

In bestimmten Ausgestaltungen können diese geringeren Anteile auch null betragen. In diesem Fall umfasst das vorgeschlagene Verfahren und seine Ausgestaltungen, dass die Zwischenkühler nur in dem ersten Verfahrensmodus betrieben werden, und dass der terminale Wärmeübertrager nur in dem zweiten Verfahrensmodus betrieben wird. Auf diese Weise kann der Betrieb der Anlage spezifisch an die Bedingungen und die Erfordernisse der Wärmeabfuhr im Voll- und Teillastbetrieb angepasst werden.

In bestimmten Ausgestaltungen des vorgeschlagenen Verfahrens ist vorgesehen, dass die Regeleinrichtung für eine Feedforward-Regelung in Abhängigkeit von einer Anlagenlast eingerichtet ist. Eine Feedforward-Regelung kann eine schnellere und genauere Steuerung der Prozessleistung ermöglichen, die Last und den Verschleiß der Aktuatoren reduzieren und die Stabilität und Robustheit der Anlage erhöhen.

In bestimmten Ausgestaltungen des vorgeschlagenen Verfahrens kann ferner vorgesehen sein, dass die Regelgröße der Regeleinrichtung in Abhängigkeit von einer prognostizierten Anlagenlast verändert wird. Hierdurch ist eine prädiktive Anpassung des Betriebsmodus an einen künftigen Lastmodus möglich. Beispielsweise kann bei der Verwendung von erneuerbaren Energien ein Einbruch im Energieangebot typischerweise bereits vorab prognostiziert werden, so dass sich mit einer gewissen Verzögerung auch eine Reduzierung im Wasserstoffangebot ergibt. Diese Verzögerung reicht für eine entsprechende Feedforward-Regelung aus.

Mithilfe der in den vorgeschlagenen Ausgestaltungen vorgeschlagenen Regelungskonzept kann ein automatisierter, sicherer, stabiler und apparateschonender Wechsel vom normalen Betriebsmodus (konventioneller Betrieb, keine Nutzung des terminalen Wärmeübertragers, aber Zwischenkühlung der Betten) in den Unterlastmodus (volle Nutzung des terminalen Wärmeübertragers, aber keine Zwischenkühlung der Betten) gewährleistet werden. Dieses Umstellen, insbesondere in in Abhängigkeit von der Last, kann einen vollautomatisierten Betrieb einer Ammoniakanlage mit entsprechendem Ammoniakreaktor über dem gesamten Betriebsbereich der Anlage gewährleisten.

Die vorgeschlagene Anlage ist zur Herstellung eines Ammoniakprodukts eingerichtet, wobei die Anlage einen Synthesereaktor umfasst, der eine Anzahl von Katalysatorbetten aufweist, die in einer Strömungsrichtung hintereinander in dem Synthesereaktor angeordnet sind, wobei dem Synthesereaktor ein Stickstoff und Wasserstoff enthaltendes erstes Gasgemisch zuführbar und ein Stickstoff, Wasserstoff und Ammoniak enthaltendes zweites Gasgemisch entnehmbar ist, wobei nach einem in der Strömungsrichtung letzten Katalysatorbett der Katalysatorbetten ein terminaler Wärmeübertrager innerhalb des Synthesereaktors bereitgestellt ist, und wobei der terminale Wärmeübertrager zumindest zeitweise unter Verwendung eines einstellbaren Anteils des ersten Gasgemischs zum Kühlen des zweiten Gasgemischs betreibbar ist.

In der vorgeschlagenen Anlage ist eine Regeleinrichtung bereitgestellt, die dafür eingerichtet ist, den Anteil des ersten Gasgemischs, der zumindest zeitweise für das Kühlen des zweiten Gasgemischs verwendet wird, einzustellen, wobei die Regeleinrichtung für einen Betrieb mit einer Regelgröße eingerichtet ist, die ausgewählt ist aus einer Temperatur an einem Eintritt in das in der Strömungsrichtung letzte Katalysatorbett oder einer Differenz zwischen der Temperatur an dem Eintritt in das in der Strömungsrichtung letzte Katalysatorbett und einer Temperatur an einem Austritt eines in der Strömungsrichtung ersten Katalysatorbetts der Katalysatorbetten.

Vorteile und Merkmale, die bezüglich des vorgeschlagenen Verfahrens beschrieben wurden, gelten auch für die vorgeschlagene Anlage und umgekehrt. Diese werden entsprechend nur einmalig beschrieben.

Entsprechendes gilt auch für eine Anlage, die dazu eingerichtet sein kann, ein Verfahren gemäß einer beliebigen Ausgestaltung durchzuführen.

### Zeichnungen

Im Rahmen der vorliegenden Offenbarung vorgeschlagene Aspekte werden anhand der beiliegenden Zeichnung näher erläutert. Dabei zeigen
Figuren 1 und 2 Anlagen gemäß hier vorgeschlagenen Ausgestaltungen in Form von Blockdiagrammen veranschaulichen; und
Figuren 3 bis 5 zeitliche Verläufe von Kenngrößen bei Verfahren gemäß hier vorgeschlagenen Ausgestaltungen.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Funktionen, Merkmale, Strukturen und/oder andere Aspekte nicht als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus diesen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende in ihrer Funktion einander entsprechende, baulich identische oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Sämtliche hier verwendete Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Element der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B, C in beliebiger Kombination" gemeint.

Verfahren zur Herstellung von Ammoniak sind in der einschlägigen Fachliteratur beschrieben. Lediglich beispielhaft wird auf den Artikel "Ammonia, 2. Production Processes" in Ullmann's Encyclopedia of Industrial Chemistry, Onlinepublikation 15. Oktober 2011, doi: 10.1002/14356007.o02_o11, verwiesen. Insbesondere wird zu den Grundlagen von hier vorgeschlagenen Ausgestaltungen auf die bereits eingangs zitierte EP 4 349 779 A1 verwiesen.

Anlagen zur Herstellung eines Ammoniakprodukts umfassen neben einem oder mehreren Synthesereaktoren zur Ammoniaksynthese auch Anlagenteile zur Herstellung von Wasserstoff bzw. Synthesegas sowie Anlagenteile zur Gasaufbereitung. Die Herstellung von Wasserstoff bzw. Synthesegas kann insbesondere eine Reformierung von Kohlenwasserstoffen wie Dampf- oder Autothermreformierung oder Partialoxidation umfassen. Anlagen zur Herstellung eines Ammoniakprodukts werden herkömmlicherweise bei Volllast oder zumindest hoher Anlagenlast betrieben, d.h. in einem Bereich von 50 bis 100% der Maximallast. Es wird herkömmlicherweise keine besondere Aufmerksamkeit beim Anlagendesign auf niedrige oder sehr niedrige Teillasten gelegt. Dies ist insbesondere deshalb der Fall, weil die Herstellung von Wasserstoff bzw. Synthesegas mittels der genannten Schritte in der Teillastfähigkeit ohnehin beschränkt ist. Minimale Lasten liegen dabei typischerweise bei 40 bis 50% der Maximallast. Daher wird die Ammoniaksynthese ebenfalls nicht für schnelle und häufige Lastwechsel ausgelegt.

Generell soll, wenn hiervon einer "Last" (Volllast, Teilllast, reduzierte Last usw.) die Rede ist, sich dieser Begriff auf den frisch eingesetzten Stickstoff und Wasserstoff für die Ammoniaksynthese beziehen. Wie bereits erwähnt, werden der Ammoniaksynthese neben diesem frisch eingesetzten Stickstoff und Wasserstoff weiterer Stickstoff und Ammoniak zugeführt, die aus einer Rückführung nicht umgesetzter Komponenten stammen. Die Gesamtmenge an Stickstoff und Wasserstoff, die in einem Durchgang der Ammoniaksynthese zur Verfügung stehen, wird durch den frisch eingesetzten Stickstoff und Wasserstoff und den rückgeführten Stickstoff und Ammoniak gebildet.

Bei den konventionellen Verfahren zur Herstellung von Wasserstoff durch Reformierung von Kohlenwasserstoffen wird Kohlendioxid gebildet. Dieses wird abgetrennt und entweder in die Atmosphäre freigesetzt oder mit großem finanziellem und apparativem Aufwand durch Sequestrierung den atmosphärischen Kreisläufen entzogen. Um diese Nachteile zu überwinden, werden in letzter Zeit verstärkt Anstrengungen unternommen, Wasserstoff kohlendioxidfrei, beispielsweise durch elektrochemische Zerlegung von Wasser unter Verwendung eines Elektrolyseurs zu gewinnen. Der insgesamt für die Ammoniakerzeugung benötigte Strom wird dabei direkt aus regenerativen Quellen wie Wind- oder Solarkraftwerken, oder als Überschussstrom aus dem öffentlichen Netz bezogen, weshalb er nicht mit konstanter Leistung zur Verfügung steht. Da sich der Betrieb des Elektrolyseurs und eines evtl. zur Stickstofferzeugung eingesetzten Luftzerlegers relativ einfach und schnell an schwankende Bedingungen anpassen lässt und die Produktionsmengen von Wasserstoff und Stickstoff in erster Näherung proportional zur elektrischen Leistung sind, variieren die Mengenströme des im Elektrolyseur produzierten Wasserstoffs und des im Luftzerleger erzeugten Stickstoffs mit der Menge des verfügbaren elektrischen Stroms. Entsprechend erreichen die verfügbaren Mengen von Wasserstoff und ggf. Stickstoff häufig und über längere Zeiträume weniger als die Hälfte der Werte, die für einen Vollastbetrieb der Ammoniaksynthese erforderlich sind.

Die Ammoniaksynthese sollte daher vorteilhafterweise der Wasserstofferzeugung folgen können und bei Niedrigenergiezeiten (z.B. nachts bei Sonnenstrom oder bei Windflauten) in sehr niedriger Teillast (ca. 5% bis 10%) betrieben werden können. Wechsel von Volllast zu sehr niedriger Teillast und zurück zu Volllast können täglich oder in noch kürzeren Zeitabständen erforderlich sein. In diesem Zusammenhang vorgeschlagene Konzepte, wie sie beispielsweise in der WO 2012/037571 A2, der EP 3 426 601 B1 und von S. Sabbaghi, Chem. Engin. Res. and Des., Band 128, Seiten 306-317 offenbart und in der EP 4 349 779 A1 diskutiert sind, erweisen sich in der Praxis ggf. als nicht zufriedenstellend.

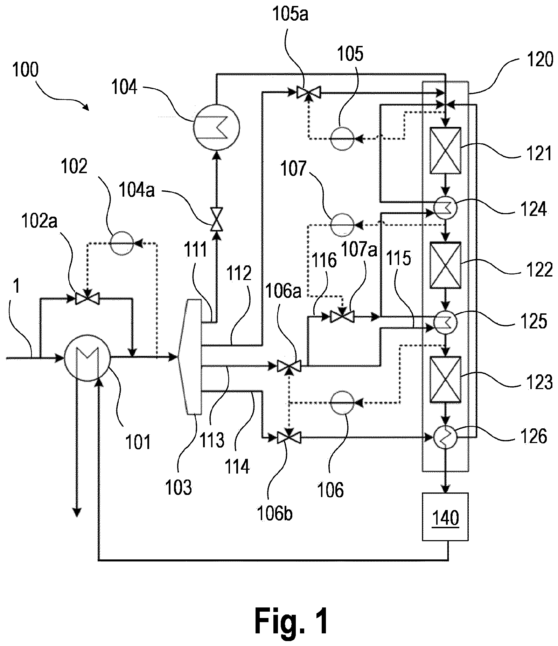

Das in der EP 4 349 779 A1 vorgeschlagene Verfahren, das hier vorgeschlagenen Ausgestaltungen zugrunde liegen kann, ermöglicht den Betrieb einer Ammoniaksynthese bei sehr niedriger Teillast von insbesondere ca. 5% bis 10%, so dass sie auch bei stark schwankender Ammoniaksynthesegasmenge ohne oder mit gegenüber dem Stand der Technik deutlich kleineren Zwischenspeichern für Wasserstoff und/oder Stickstoff ausgeführt werden kann. Die hier vorgeschlagenen Ausgestaltungen bilden ein derartiges Verfahren in vorteilhafter Weise weiter, wobei zu Grundlagen weiterhin insbesondere auf die Erläuterungen zu Figur 1 der EP 4 349 779 A1 verwiesen wird.

In Figur 1 ist eine Anlage gemäß einer hier vorgeschlagenen Ausgestaltung in Form eines stark vereinfachten Anlagendiagramms in Teildarstellung veranschaulicht. Die in Figur 1 veranschaulichte Anlage ist insgesamt mit 100 bezeichnet. Auf eine Darstellung einer Bereitstellung von Wasserstoff und Stickstoff, beispielsweise mittels Elektrolyse und Luftzerlegung, wird ebenso verzichtet, wie auf eine Darstellung einer Ammoniakaufbereitung und Rückführung.

Der Anlage 100 wird ein über eine Zufuhrleitung 1 ein Wasserstoff und Stickstoff enthaltendes Gasgemisch zugeführt, das hier auch als "erstes" Gasgemisch, oder fachüblich auch als "Ammoniaksynthesegas" bezeichnet wird, und das hier eine Mischung aus einem Frischeinsatz und einem rückgeführten Gasgemisch darstellen kann. Der Frischeinsatz definiert, wie erwähnt, insbesondere die Last, unter der die Anlage 100 betrieben wird. Das erste Gasgemisch kann im dargestellten Beispiel unter Verwendung eines im oben erläuterten Sinn "externen" Feed-Effluent-Wärmeübertragers 101 temperiert werden. Der externe Feed-Effluent-Wärmeübertrager 101 kann dazu nach Maßgabe einer ersten Temperaturregelung 102 über ein Bypassventil 102a umgangen werden, um eine Temperatur des ersten Gasgemischs einzustellen.

Generell sind in dieser und den nachfolgenden Figuren jeweils in bestimmte Regelungen eingehende Istwerte bzw. Sensorwerte, die vorliegend überwiegend mittels Temperaturgebern ermittelt werden, sowie die entsprechenden Stellgrößen in der fachüblichen Weise mit gestrichelten Pfeilen dargestellt.

Das erste Gasgemisch kann sodann mittels eines Gasverteilers 103 auf vier Einzelleitungen 111, 112, 113 und 114 aufgeteilt werden. Der Teil des ersten Gasgemischs in der ersten Einzelleitung 111, hier als "erster Gasanteil" bezeichnet, wird mittels eines Heizers 104 erwärmt und in einen Synthesereaktor 120 zur Ammoniaksynthese eingespeist. Ein Mengenstrom durch die erste Einzelleitung 111 wird dabei über ein Ventil 104a eingestellt. Der Synthesereaktor 120 umfasst im dargestellten Beispiel drei strömungstechnisch verbundene Katalysatorbetten 121, 122, 123, zwischen denen jeweils Wärmeübertrager 124 und 125 zur Zwischenkühlung angeordnet sind. In Strömungsrichtung nach dem Katalysatorbett 123 ist ein weiterer Wärmeübertrager 126 angeordnet, der hier, wie bereits weiter oben ausführlicher erläutert, als "interner" Feed-Effluent-Wärmeübertrager bezeichnet wird.

Über die Einzelleitung 112 kann nach Maßgabe einer zweiten Temperaturregelung 105 über ein Ventil 105a eine Zuspeisung eines weiteren Teils des ersten Gasgemischs, hier als "zweiter Gasanteil" bezeichnet, eingestellt werden. Dies wiederum ermöglicht die Einstellung einer Einspeisetemperatur in den Synthesereaktor 120 bzw. das erste Katalysatorbett 121. Ein weiterer Teil des ersten Gasgemischs in der Einzelleitung 113, hier als "dritter Gasanteil" bezeichnet, wird nach Maßgabe einer dritten Temperaturregelung 106 über ein Ventil 106a eingestellt. Nach Maßgabe der dritten Temperaturregelung 106 erfolgt auch eine Einstellung eines Ventils 106a, dessen Zweck weiter unten erläutert wird, mittels einer Split-Range-Regelung.

Anschließend erfolgt eine Aufteilung des dritten Gasanteils auf Teilleitungen 115 und 116. Der Teil des ersten Gasgemischs in Teilleitung 115, d.h. eine Teilmenge des dritten Gasanteils, die hier als "erste Teilmenge" bezeichnet wird, wird durch den internen Wärmeübertrager 125 geleitet. Das erste Gasgemisch in Teilleitung 116, d.h. eine weitere Teilmenge des dritten Gasanteils, die hier als "zweite Teilmenge" bezeichnet wird, wird nach Maßgabe einer vierten Temperaturregelung 107 über ein Ventil 107a eingestellt Die zweite Teilmenge des dritten Gasanteils wird sodann mit der ersten Teilmenge des dritten Gasanteils vereinigt und dann durch den Wärmeübertrager 124 geleitet sowie anschließend dem Eingang des Synthesereaktors 120 bzw. dem ersten Katalysatorbett 121 zugeführt. Mittels der zweiten Teilmenge des dritten Gasanteils kann über die vierte Temperaturregelung 107 eine Temperatur stromab der Vereinigung eingestellt werden.

Ein weiterer Teil des ersten Gasgemischs, hier als "vierter Gasanteil" bezeichnet, wird nach Maßgabe der dritten Temperaturregelung 106 über das Ventil 106b eingestellt. Die Temperaturregeulg 106 kann dabei die Ventile 106a und 106b in Form einer Spit-Range-Regelung verwenden. Dabei wird, in einfachster Form, der Öffnungsgrad des Ventils 106a um den Prozentsatz verringert, um den der des Ventils 106b geöffnet wird. Der vierte Gasanteil wird sodann durch den internen Feed-Effluent-Wärmeübertrager, also einen terminalen Wärmeübertrager 126, geleitet und dann ebenfalls dem Eingang des Synthesereaktors 120 zugeführt.

Ein aus dem Synthesereaktor 120 abströmendes zweites Gasgemisch kann mittels geeigneter Einrichtungen abgekühlt werden, wobei in Figur 1 zur allgemeinen Veranschaulichung ein Block 140 dargestellt ist. Das auf diese Weise abgekühlte zweite Gasgemisch 120 wird sodann mittels des externen Feed-Effluent-Wärmeübertragers 101 weiter abgekühlt und sodann einer Abscheidung von Ammoniak zugeführt, die hier nicht gesondert veranschaulicht ist.

In dem in Anlage 100 implementierten Verfahren zur Herstellung eines Ammoniakprodukts wird also ein Synthesereaktor 120 verwendet, der eine Anzahl von Katalysatorbetten 121, 122, 123 aufweist, die in einer Strömungsrichtung hintereinander in dem Synthesereaktor 120 angeordnet sind. Dem Synthesereaktor 120 wird ein Stickstoff und Wasserstoff enthaltendes erstes Gasgemisch zugeführt und ein Stickstoff, Wasserstoff und Ammoniak enthaltendes zweites Gasgemisch entnommen. Nach einem in der Strömungsrichtung letzten Katalysatorbett 123 der Katalysatorbetten 121, 122, 123 ist ein terminaler Wärmeübertrager 126 innerhalb des Synthesereaktors 120 bereitgestellt. Der terminale Wärmeübertrager 126 wird zumindest zeitweise unter Verwendung eines einstellbaren Anteils des ersten Gasgemischs zum Kühlen des zweiten Gasgemischs betrieben. Der Anteil des ersten Gasgemischs, der zumindest zeitweise für das Kühlen des zweiten Gasgemischs verwendet wird, nach Maßgabe einer Regeleinrichtung 106 eingestellt, die in Anlage 100 mit einer Temperatur an einem Eintritt in das in der Strömungsrichtung letzte Katalysatorbett 123 als Regelgröße betrieben wird.

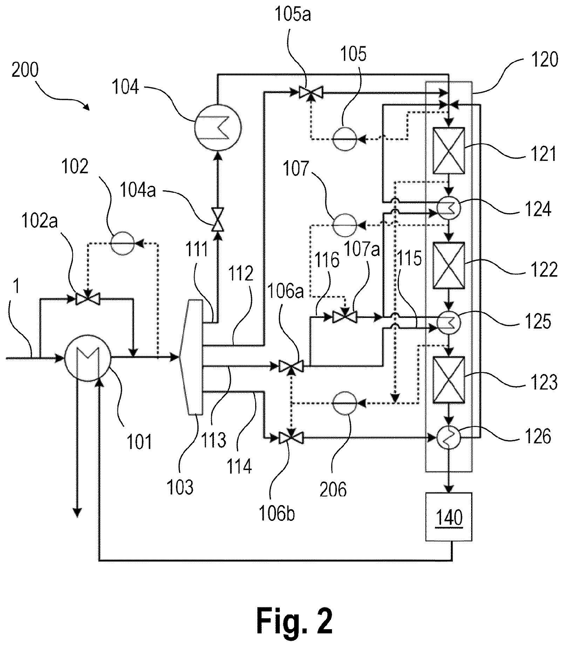

Eine weitere Ausgestaltung ist in Figur 2 in Form einer Anlage 200 veranschaulicht, wobei bereits zu Figur 1 und Anlage 100 erläuterte Komponenten und Funktionen nicht wiederholt erläutert werden.

Der terminale Wärmeübertrager 126 wird auch in der Anlage 200 zumindest zeitweise unter Verwendung eines einstellbaren Anteils des ersten Gasgemischs zum Kühlen des zweiten Gasgemischs betrieben. Der Anteil des ersten Gasgemischs, der zumindest zeitweise für das Kühlen des zweiten Gasgemischs verwendet wird, wird hier aber nach Maßgabe einer abweichend mit 206 bezeichneten Regeleinrichtung, die in Anlage 200 mit einer Differenz zwischen der Temperatur an dem Eintritt in das in der Strömungsrichtung letzte Katalysatorbett 123 und einer Temperatur an einem Austritt eines in der Strömungsrichtung ersten Katalysatorbetts 121 der Katalysatorbetten 121, 122, 123 als Regelgröße betrieben wird. Beispielsweise kann hier ein Proportional-Integral-Differential-Regler vorgesehen sein, für den ein Setpoint für die Temperaturdifferenz abhängig von der Anlagenlast vorgegeben wird, sodass die Temperaturdifferenz bei geringer Last geringer ist.

Sowohl in Anlage 100 gemäß Figur 1 als auch in Anlage 200 gemäß Figur 2 ist insbesondere vorgesehen, dass die Zwischenkühler 124, 125 vorzugsweise in dem ersten Verfahrensmodus betrieben werden, und dass der terminale Wärmeübertrager 126 vorzugsweise in dem zweiten Verfahrensmodus betrieben wird.

Die zu Figur 1 und Anlage 100 ansgesprochene Split-Range-Regelung kann auch in Anlage 200 gemäß Figur 2 implementiert sein. Während einer Lastreduktion verringert der Regler entsprechend automatisch den Ventilöffnungsgrad des Ventils 106a und erhöht den Ventilöffnungsgrad des Ventils 106b.

Wie aus den in den nachfolgend dargestellten Trajektorien für Temperaturen, Drücke und Massenströme ersichtlich, kann so ein Lastwechsel vollzogen werden, ohne große Schwankungen in den genannten Variablen zu erzeugen. Sofern ein zukünftiger Lastzustand bekannt ist, kann auch dieser in die Bestimmung des Setpoints einfließen.

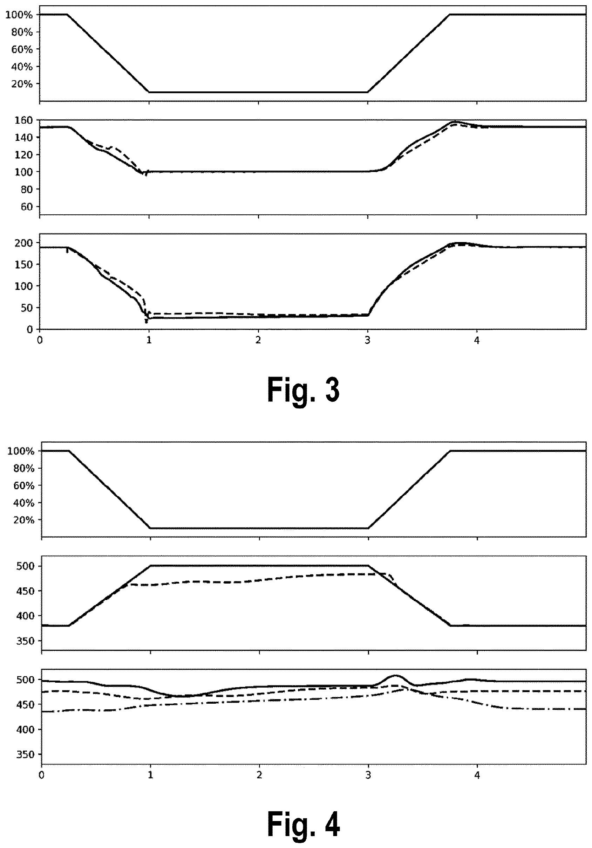

In Figur 3 sind dabei drei Diagramme dargestellt, die entsprechende Aspekte hier vorgeschlagener Ausgestaltungen veranschaulichen, wobei das obere Diagramm Lasten in Prozent einer Vollast, das mittlere Diagramm Druckverläufe in bar, und das untere Diagramm Massenflüsse in Tonnen pro Stunde, jeweils über eine Zeit in Stunden auf der Horizontalachse, veranschaulichen.

Mit durchgezogenen Linien sind dabei Werte dargestellt, die aus einer Realtime-Regelung resultieren, gestrichelte Linien stellen Werte aus einer Regelung dar, bei der sich der Setpoint an einem Lastzustand "15 Minuten in der Zukunft" orientiert. Besonders bei einer Lastzunahme kann diese Strategie sinnvoll sein, um eine übermäßige Druckzunahme zu vermeiden, wie insbesondere aus dem mittleren Diagramm der Figur 3 ersichtlich. Das Wissen über zukünftige Lastzustände ist für die Erfindung aber nicht zwingend notwendig. Eine andere Möglichkeit mit dem gleichen Effekt ist, den Setpoint, verglichen mit der Anlagenlast, schneller an seinen Sollwert im Design anzugleichen.

In Figur 4 sind erneut drei Diagramme zur Veranschaulichung hier vorgeschlagener Aspekte dargestellt, wobei das obere Diagramm, wie gemäß Figur 3, Lasten in Prozent einer Vollast darstellt, das mittlere Diagramm aber Temperaturverläufe am Eintritt in das dritte Katalysatorbett 123 (beispielsweise in einer Anlage 100 bzw. 200 entsprechend Figur 1 und 2), und das untere Diagramm Temperaturverläufe am Austritt des ersten, zweiten und dritten Katalysatorbetts 121, 122, 123, jeweils über eine Zeit in Stunden auf der Horizontalachse, veranschaulichen. Alle Diagramme der Figur 4 beziehen sich auf eine Realtime-Regelung.

Konkret ist im mittleren Diagramm der Figur 4 mit einer durchgezogenen Linie der Verlauf des Temperatursetpoints am eintritt in das dritte Katalysatorbett 123 und mit einer gestrichelten Linie der Verlauf der entsprechenden Prozessvariable dargestellt. Im unteren Diagramm der Figur 4 zeigt die durchgezogene Linie die Austrittstemperatur aus dem ersten Katalysatorbett 121, die gestrichelte Linie die Austrittstemperatur aus dem zweiten Katalysatorbett 122 und die strichpunktierte Linie die Austrittstemperatur aus dem dritten Katalysatorbett 123.

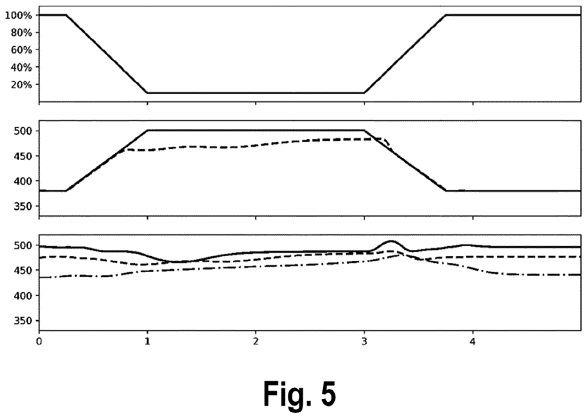

Die in Figur 5 dargestellten Diagramme entsprechen im Wesentlichen jenen, die in Figur 4 veranschaulicht sind, allerdings beziehen sich diese auf eine Regelung mit prognostiziertem Setpoint in 15 Minuten.

## Patentansprüche

1. Verfahren zur Herstellung eines Ammoniakprodukts, wobei ein Synthesereaktor (120) verwendet wird, der eine Anzahl von Katalysatorbetten (121, 122, 123) aufweist, die in einer Strömungsrichtung hintereinander in dem Synthesereaktor (120) angeordnet sind, wobei dem Synthesereaktor (120) ein Stickstoff und Wasserstoff enthaltendes erstes Gasgemisch zugeführt und ein Stickstoff, Wasserstoff und Ammoniak enthaltendes zweites Gasgemisch entnommen wird, wobei nach einem in der Strömungsrichtung letzten Katalysatorbett (123) der Katalysatorbetten (121, 122, 123) ein terminaler Wärmeübertrager (126) innerhalb des Synthesereaktors (120) bereitgestellt ist, und wobei der terminale Wärmeübertrager (126) zumindest zeitweise unter Verwendung eines einstellbaren Anteils des ersten Gasgemischs zum Kühlen des zweiten Gasgemischs betrieben wird, **dadurch gekennzeichnet, dass** der Anteil des ersten Gasgemischs, der zumindest zeitweise für das Kühlen des zweiten Gasgemischs verwendet wird, nach Maßgabe einer Regeleinrichtung (106, 206) eingestellt wird, und dass die Regeleinrichtung (106, 206) mit einer Regelgröße betrieben wird, die ausgewählt ist aus einer Temperatur an einem Eintritt in das in der Strömungsrichtung letzte Katalysatorbett (123) oder einer Differenz zwischen der Temperatur an dem Eintritt in das in der Strömungsrichtung letzte Katalysatorbett (123) und einer Temperatur an einem Austritt eines in der Strömungsrichtung ersten Katalysatorbetts (121) der Katalysatorbetten (121, 122, 123).

2. Verfahren nach Anspruch 1, wobei die Anzahl der Katalysatorbetten (121, 122, 123) drei beträgt.

3. Verfahren nach Anspruch 1, wobei zwischen den Katalysatorbetten (121, 122, 123) Wärmeübertrager als Zwischenkühler (124, 125) angeordnet sind, die zumindest zeitweise unter Verwendung eines weiteren Anteils des ersten Gasgemischs zur Kühlung von Zwischengemischen, die durch die Katalysatorbetten (121, 122, 123) strömen, betrieben werden.

4. Verfahren nach Anspruch 3, wobei die Temperaturregelung (106) als Split-Range-Regelung konfiguriert ist, die den Anteil des ersten Gasgemischs, der zumindest zeitweise für das Kühlen des zweiten Gasgemischs verwendet wird, und der weitere Anteil des ersten Gasgemischs, der zumindest zeitweise zur Kühlung der Zwischengemische verwendet wird, einstellt, wobei als Stellgrößen der Split-Range-Regelung Ventilöffnungsgrade insbesondere von Ventilen (106a, 106b) sind, die den Anteil des ersten Gasgemischs, der zumindest zeitweise für das Kühlen des zweiten Gasgemischs verwendet wird, und den weiteren Anteil des ersten Gasgemischs, der zumindest zeitweise zur Kühlung der Zwischengemische verwendet wird, einstellen.

5. Verfahren nach Anspruch 3 oder 4, wobei das Verfahren einen ersten Verfahrensmodus und einen zweiten Verfahrensmodus umfasst, wobei dem Synthesereaktor (120) mit dem ersten Gasgemisch in dem ersten Verfahrensmodus frisch eingesetzter Stickstoff und Wasserstoff in einer ersten Menge zugeführt wird, wobei dem Synthesereaktor (120) mit dem ersten Gasgemisch in dem zweiten Verfahrensmodus frisch eingesetzter Stickstoff und Wasserstoff in einer zweiten Menge zugeführt wird, wobei die zweite Menge des frisch eingesetzten Stickstoffs und Wasserstoffs geringer ist als die erste Menge des frisch eingesetzten Stickstoffs und Wasserstoffs.

6. Verfahren nach Anspruch 5, wobei die zweite Menge des frisch eingesetzten Stickstoffs und Wasserstoffs weniger als 50%, 40%, 30%, 20%, 10% oder 5% der ersten Menge des frisch eingesetzten Stickstoffs und Wasserstoffs beträgt.

7. Verfahren nach einem der Ansprüche 3 bis 6, wobei dem Synthesereaktor (120) das zweite Gasgemisch in dem ersten Verfahrensmodus in einer dritten Menge entnommen wird, wobei dem Synthesereaktor das zweite Gasgemisch in dem zweiten Verfahrensmodus in einer vierten Menge entnommen wird, und
wobei die vierte Menge des zweiten Gasgemischs geringer oder gleich der dritten Menge des zweiten Gasgemischs ist.

8. Verfahren nach Anspruch 7, wobei die vierte Menge des zweiten Gasgemischs mehr als 10%, 20%, 30%, 40% oder 50% der vierten Menge des zweiten Gasgemischs beträgt.

9. Verfahren nach einem der Ansprüche 3 bis 8, wobei die Zwischenkühler (124, 125) und/oder der terminale Wärmeübertrager (126) in dem ersten Verfahrensmodus und in dem zweiten Verfahrensmodus gleich oder unterschiedlich Umfang betrieben werden.

10. Verfahren nach Anspruch 9, wobei der weitere Anteil des ersten Gasgemischs, der zur Kühlung der Zwischengemische durch die Zwischenkühler (124, 125) geführt wird, in dem zweiten Verfahrensmodus geringer als in dem ersten Verfahrensmodus ist, und/oder wobei der der Anteil des ersten Gasgemischs, der für das Kühlen des zweiten Gasgemischs durch den terminalen Wärmeübertrager (126) geführt wird, in dem ersten Verfahrensmodus geringer als in dem zweiten Verfahrensmodus ist.

11. Verfahren nach einem der Ansprüche 3 bis 10, wobei die Regeleinrichtung (106, 206) für eine Feedforward-Regelung in Abhängigkeit von einer Anlagenlast eingerichtet ist.

12. Verfahren nach Anspruch 11, wobei die Regelgröße der Regeleinrichtung (106, 206) in Abhängigkeit von der Anlagenlast verändert wird.

13. Verfahren nach Anspruch 11 oder 1, wobei die Regelgröße der Regeleinrichtung (106, 206) in Abhängigkeit von einer prognostizierten Anlagenlast verändert wird.

14. Anlage (100, 200) zur Herstellung eines Ammoniakprodukts, wobei die Anlage (100, 200) einen Synthesereaktor (120) umfasst, der eine Anzahl von Katalysatorbetten (121, 122, 123) aufweist, die in einer Strömungsrichtung hintereinander in dem Synthesereaktor (120) angeordnet sind, wobei dem Synthesereaktor (120) ein Stickstoff und Wasserstoff enthaltendes erstes Gasgemisch zuführbar und ein Stickstoff, Wasserstoff und Ammoniak enthaltendes zweites Gasgemisch entnehmbar ist, wobei nach einem in der Strömungsrichtung letzten Katalysatorbett (123) der Katalysatorbetten (121, 122, 123) ein terminaler Wärmeübertrager (126) innerhalb des Synthesereaktors (120) bereitgestellt ist, und wobei der terminale Wärmeübertrager (126) zumindest zeitweise unter Verwendung eines einstellbaren Anteils des ersten Gasgemischs zum Kühlen des zweiten Gasgemischs betreibbar ist, **dadurch gekennzeichnet, dass** eine Regeleinrichtung (106, 206) bereitgestellt ist, die dafür eingerichtet ist, den Anteil des ersten Gasgemischs, der zumindest zeitweise für das Kühlen des zweiten Gasgemischs verwendet wird, einzustellen, und dass die Regeleinrichtung (106, 206) für einen Betrieb mit einer Regelgröße eingerichtet ist, die ausgewählt ist aus einer Temperatur an einem Eintritt in das in der Strömungsrichtung letzte Katalysatorbett (123) und einer Differenz zwischen der Temperatur an dem Eintritt in das in der Strömungsrichtung letzte Katalysatorbett (123) und einer Temperatur an einem Austritt eines in der Strömungsrichtung ersten Katalysatorbetts (121) der Katalysatorbetten (121, 122, 123).

15. Anlage (13) nach Anspruch 14, die zur Durchführung eines Verfahrens nach einem der Ansprüche 1 bis 13 eingerichtet ist.
